# EUROPEAN PATENT APPLICATION

(11) **EP 4 838 341 A1**
(43) Date of publication of application: **11.11.2026**
(21) Application number: 26171157.6
(22) Date of filing: 08.04.2026
(51) Int. Cl.: G06F 3/041

(54) **SELF-CAPACITANCE SENSING FOR A CAPACITIVE SENSOR**

(30) Priority: 11.04.2025 US 202519176753
(71) Applicant: Avago Technologies International Sales Pte. Limited, Singapore 768923 (SG)
(72) Inventor: Lin, Fang, Cupertino, CA, 95014 (US); Kwan, Tom W., Cupertino, CA, 95014 (US); Wei, Guo Wen, Saratoga, CA, 95070 (US); Lin, Jiaming, San Jose, CA, 95128 (US); Mehr, Iuri, Irvine, CA, 92618 (US); Su, Feng, San Jose, CA, 95132 (US)
(74) Representative: Grünecker Patent- und Rechtsanwälte PartG mbB

(57) **Abstract**

An example apparatus includes: an electrode including a first admittance to an electrical ground and a second admittance to the electrical ground, the electrode coupled to a first node; a first amplifier including a first input terminal coupled to the first node, a second input terminal coupled to a voltage source, and an output terminal configured to supply a first voltage; a second amplifier including an input terminal coupled to the voltage source and an output terminal, the second amplifier having as gain larger than one; and a first network coupled between the output terminal of the second amplifier and the first node, the first network having a third admittance.

## Description

### BACKGROUND

Capacitive sensing may be the ability of a device, based on capacitive coupling, to detect and measure objects that are conductive or have a dielectric constant different from the environment (e.g., air). A capacitive sensor may be a device capable of capacitive sensing. A capacitive sensor can be part of another device, such as a human interface device (HID). For example, a touchscreen may be a display that can detect touch input from a user. A touchscreen can include a capacitive sensor as an input device (sometimes referred to in this context as a touch panel) layered together with a display as an output device. Touchscreens are commonly found in smartphones, smart watches, tablets, laptops, and other types of electronic devices. Other types of HIDs with capacitive sensors can include touchpads and touch buttons.

A capacitive sensor can include an arrangement of electrodes. An electrode may be a conductor, typically interacting with an external part of a circuit (e.g., a human finger on a touchscreen). The electrodes can be made from different conductive materials, such as copper, indium tin oxide (ITO), printed ink, and the like known in the art. The electrodes can be implemented on a substrate, such as a printed circuit board (PCB), glass, flexible material, or the like known in the art. An electrode can have a capacitive path to electrical ground, e.g., the mutual coupling of electric field lines between the electrode and other conductor(s) at an electric potential of ground. Electrical ground (also referred to as ground) may be a reference potential in the capacitive sensor and/or device having the capacitive sensor from which voltages are measured. For example, the electrodes can have a capacitive path to a ground plane, e.g., a conductive surface connected to electrical ground.

A capacitor may be a device that can store electric charge. The electrodes can form capacitors relative to electrical ground. When no objects are present, this capacitance may be large (sometimes referred to as the baseline capacitance). When an object, such as a finger, is close to the electrode, the object can add conductive surface area that changes the electrode's effective capacitance to ground. A controller may be a circuit that controls a device. A controller for a capacitive sensor, referred to herein as a touch controller, can supply a signal to an electrode (referred to as an excitation signal). The excitation signal can charge and discharge the electrode. The touch controller can measure the response (e.g., charge/discharge time, voltage, current, etc.) to estimate a change in the electrode's baseline capacitance and hence detect presence of the object. This type of capacitive sensing may be referred to as self-capacitance sensing (also known as absolute capacitance sensing). Self-capacitance sensing may be measuring each electrode for changes in its capacitance to ground.

A touch controller can perform self-capacitance sensing using charge amplifiers coupled to the electrodes. A charge amplifier may be a circuit that uses a power supply to produce a voltage output proportional to the integrated value of an input current (e.g., total charge injected for a capacitive feedback element or input current for a resistive feedback element). An electrode's position in a device can introduce coupling paths that are parasitic to the electrode's capacitance to ground (e.g., capacitive paths, resistive paths, or both to PCB traces, device housings, etc.). A touch controller can be designed to cancel the undesired stimulus signal, which can be caused by large baseline capacitance (including parasitic paths) to ground. This baseline capacitance does not provide touch signal current and only occupies dynamic range. Inaccuracies in this cancellation, however, can cause the charge amplifier to saturate. In this context, saturation may be the condition in which the charge amplifier can no longer output a voltage proportional to the integrated input current because its input has been driven beyond a range supported by the power supply. This can affect the ability of the capacitive sensor to accurately sense objects.

### SUMMARY

In one embodiment, an apparatus can include an electrode. The electrode can include a first admittance to an electrical ground and a second admittance to the electrical ground. The electrode can be coupled to a first node. The apparatus can include a first amplifier. The first amplifier can include a first input terminal coupled to the first node, a second input terminal coupled to a voltage source, and an output terminal configured to supply a first voltage. The apparatus can include a second amplifier. The second amplifier can include an input terminal coupled to the voltage source and an output terminal. The second amplifier can have a gain larger than one. The apparatus can include a first network coupled between the output terminal of the second amplifier and the first node. The first network can have a third admittance.

In another embodiment, a touch controller for a capacitive sensor can include a plurality of channels coupled to a digital signal processor (DSP). The touch controller can include a first channel of the plurality of channels. The first channel can include a first analog front-end (AFE) coupled to a first electrode of the capacitive sensor. The first electrode can include a first admittance to an electrical ground and a second admittance to the electrical ground. The first electrode can be coupled to a first node. The first AFE can include a first amplifier. The first amplifier can include a first input terminal coupled to the first node, a second input terminal coupled to a voltage source, and an output terminal configured to supply a first voltage. The first AFE can include a second amplifier. The second amplifier can include an input terminal coupled to the voltage source and an output terminal. The second amplifier can have a gain larger than one. The first AFE can include a first network coupled between the output terminal of the second amplifier and the first node. The first network can have a third admittance.

In another embodiment, a device can include at least one conductor coupled to an electrical ground. The device can include an electrode of a capacitive sensor. The electrode can include a first admittance to at least one conductor and a second admittance to the electrical ground. The electrode can be coupled to a first node. The device can include a touch controller of the capacitive sensor. The touch controller can include a first amplifier. The first amplifier can include a first input terminal coupled to the first node, a second input terminal coupled to a voltage source, and an output terminal configured to supply a first voltage. The touch controller can include a second amplifier. The second amplifier can include an input terminal coupled to the voltage source and an output terminal. The second amplifier can have a gain larger than one. The touch controller can include a first network coupled between the output terminal of the second amplifier and the first node. The first network can have a third admittance.

### BRIEF DESCRIPTION OF THE DRAWINGS

Fig. 1 is a block diagram depicting a device having a capacitive sensor according to some embodiments.
Fig. 2 is a block diagram depicting a touch controller coupled to electrodes according to some embodiments.
Fig. 3A is a schematic diagram depicting an analog front-end of a touch controller coupled between an electrode and a load circuit according to some embodiments.
Fig. 3B is a schematic diagram depicting an analog front-end of a touch controller coupled between an electrode and a load circuit according to some embodiments.
Fig. 4 is a schematic diagram depicting an analog front-end of a touch controller coupled to an electrode according to other embodiments.
Fig. 5 is a schematic diagram depicting an analog front-end of a touch controller coupled to an electrode according to still other embodiments.

### DETAILED DESCRIPTION

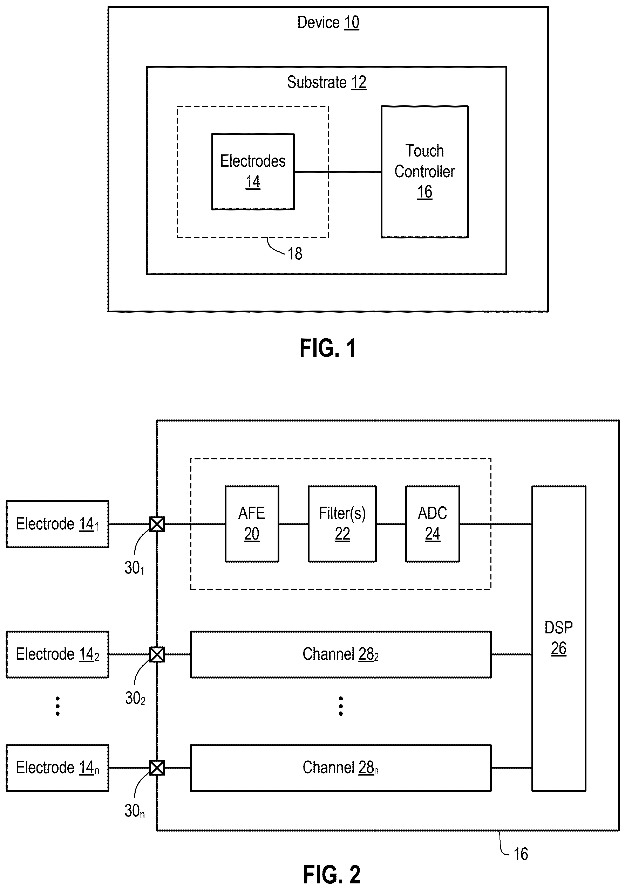

Fig. 1 is a block diagram depicting a device 10 according to some embodiments. Device 10 can be any type of device that uses a capacitive sensor. Examples include smartphones, smart watches, tablets, laptops, and the like. The capacitive sensor can include electrodes 14 and a touch controller 16 disposed on a substrate 12. A substrate may be a material configured to support components and connections between components. For example, substrate 12 can be a PCB, glass, or the like used in touch pads, touchscreens, touch buttons, and the like. Electrodes 14 can be conductors having any shape, size, and arrangement on substrate 12. Touch controller 16 can be electrically coupled to electrodes 14. For example, touch controller 16 can be disposed on substrate 12 and be electrically coupled to electrodes 14 via conductors on substrate 12. In another example, touch controller 16 can be disposed on another substrate (not shown) and be electrically coupled to electrodes 14 via conductors on substrate 12 and a flexible cable coupled to those conductors. Device 10 or substrate 12 can include conductor(s) 18 that are coupled to electrical ground. For example, conductors 18 can be a ground plane.

Fig. 2 is a block diagram depicting touch controller 16 coupled to electrodes 14 according to some embodiments. In the example shown, device 10 can include n electrodes 14, designated electrodes 14₁...14ₙ, where n is an integer greater than zero. Touch controller 16 can include n terminals designated 30₁...30ₙ. A terminal of a component can be a point of connection to the component. Terminals 30₁...30ₙ can be points of connection to touch controller 16. Electrodes 14₁...14ₙ can be coupled to terminals 30₁...30ₙ, respectively (e.g., via conductors).

Touch controller 16 can include n channels designated 28₁...28ₙ. A channel of a touch controller may be circuits coupled to an electrode. Channels 28₁...28ₙ can be coupled to electrodes 14₁...14ₙ via terminals 30₁...30ₙ, respectively. In the example shown, each channel 28₁...28ₙ can include an analog front end (AFE) 20, filter(s) 22, and an analog-to-digital converter (ADC) 24. An AFE in a device may be an analog circuit having an interface to component(s) external to the device. In touch controller 16, AFE 20 can be an interface to an electrode 14. An analog circuit may be a circuit that operates on analog signals. An analog signal may be a signal having a magnitude that can take on any value over a continuous range of values. AFE 20 can condition a signal on its input to supply a signal on its output. AFE 20 can include an amplifier configured to supply a voltage on its output proportional to an integration of current on its input. Embodiments of AFE 20 are discussed below. An amplifier may be a circuit configured use a power supply to increase the magnitude of its input at its output. The output of AFE 20 can be coupled to ADC 24 optionally through filter(s) 22. A filter may be a circuit that manipulates its input to supply an output. Filter(s) 22 can reduce noise and enhance signal clarity before digitization by ADC 24 (e.g., analog circuits, such as low-pass filter(s), band-pass filter(s), and the like). AFE 20 can include a transimpedance amplifier (charge-to voltage or current-to-voltage amplifier). Filters 22 are optional.

An ADC may be a circuit configured to convert an analog input to a digital output. ADC 24 can convert an analog signal supplied by AFE 20 (optionally through filter(s) 22) to a digital signal. A digital signal may be a signal of quantized magnitudes at discrete times. The quantized magnitudes can be represented by numbers having a finite number of digits and thus a digital signal may be a sequence of such numbers each representing signal magnitude at an instant of time. Various types of ADC circuits are known in the art. Touch controller 16 can include a digital signal processor (DSP) 26. A DSP may be a digital circuit configured to process digital signals. A digital circuit may be a circuit that operates on digital signals. A digital circuit can include, for example, various logic gates (e.g., AND, OR, NAND, NOR, XOR) and circuits formed from arrangements of logic gates (e.g., latches, flip-flops, counters, lookup tables, memories, state machines, etc.). For example, DSP 26 can process digital signals received from channels 28₁...28ₙ to determine touch events (e.g., the presence of an object, such as human finger, near electrode(s)).

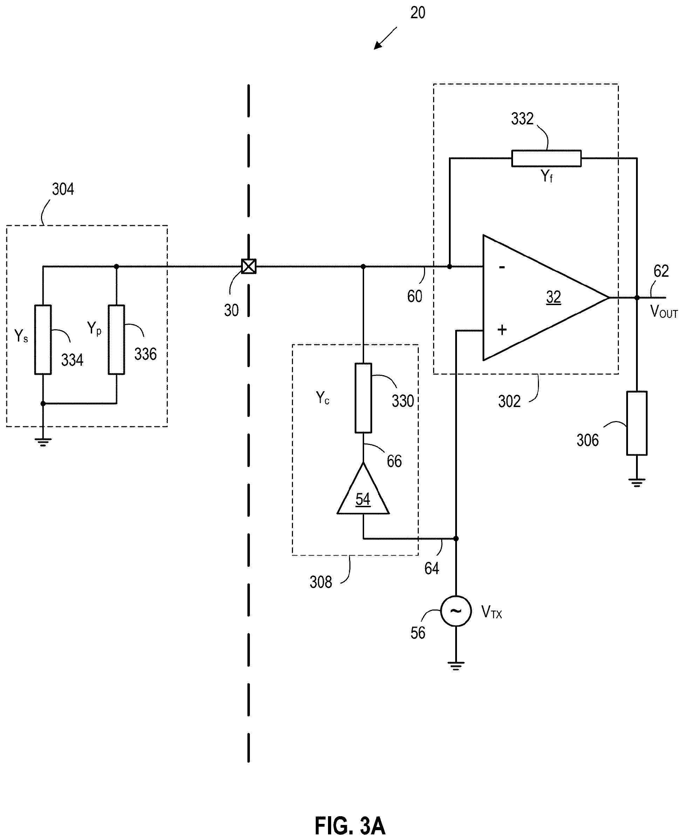

Fig. 3A is a schematic diagram depicting an AFE 20 of a touch controller coupled between an electrode and a load circuit according to some embodiments. A load circuit ("load") may be a circuit that can consume power. In touch controller 16, the load of AFE 20 can be filter(s) 22 or ADC 24. A node 62 can be an output of AFE 20. A node may be a point in a circuit where two or more circuit elements are connected. A node can be shown in the drawings as a filled circle at a wire junction. Wires that cross each other without a node or with a jump are not connected. Note that, for ease of illustration, a node may be shown as two or more separate junctions connected by only wire(s) and no circuit elements (e.g., a short-circuit connection). In such case, a reference numeral assigned to the node can be at one of the junctions or at one of the wires between the junctions, all of which collectively represent the node. AFE 20 can be coupled to the load at node 62. In the example, the load can be modeled by a network 306. An electrical network ("network") can be an interconnection of circuit elements or a model of such interconnection. Network 306 can be coupled between node 62 and electrical ground. AFE 20 can supply a voltage (V_{OUT}) on node 62. Network 306 can be external to AFE 20 and is shown in Fig. 3A for context and illustration.

AFE 20 can include a node 60 coupled to an electrode 14 via a conductive path through a terminal 30 of touch controller 16. A network 304 can model electrode 14. Network 304 can include an admittance 334 in parallel with an admittance 336. Admittance may be a measure of how easily a circuit or device allows a current to flow and can be the reciprocal of impedance. An admittance may be resistance, capacitance, or inductance, or some combination thereof. Network 304 can be coupled between a node 60 of AFE 20 and electrical ground. Admittance 334 can be a model of the touch capacitance between electrode 14 and electrical ground (e.g., a ground plane). Admittance 334 can also be designated as Ys. Admittance 336 can model a parasitic current path that interferes with the AFE's measurement of the touch capacitance. Admittance 336 can also be designated Yₚ. Network 304 can be external to touch controller 16 and AFE 20 and is shown in Fig. 3A for context and illustration.

AFE 20 can include an amplifier 302, a cancellation circuit 308, and a voltage source 56. A cancellation circuit in an AFE may be a circuit configured to substantially cancel an undesired input. Cancellation circuit 308 can operate to substantially cancel parasitics associated with electrode 14 (e.g., the current path through admittance 336 in network 304 modeling electrode 14). A voltage source may be a component (e.g., circuit) that supplies a voltage. Voltage source 56 can supply a voltage (V_{TX}). The voltage (V_{TX}) can be a time-varying voltage, such as a step function, a square wave, sinusoid, or the like. In the context of a capacitive sensor, the voltage (V_{TX}) may be referred to as the excitation signal. The input of amplifier 302 can be coupled to node 60 and a node 64. Voltage source 56 can be coupled between node 64 and electrical ground. The output of amplifier 302 can be coupled to node 62, which supplies the output voltage (V_{OUT}). Cancellation circuit 308 can be coupled between node 60 and node 64 and is described further below. Amplifier 302 can be a transimpedance amplifier. A transimpedance amplifier may be a charge-to voltage (sometimes referred to as a charge amplifier) or current-to-voltage amplifier.

In the example shown, amplifier 302 can include a differential voltage amplifier 32 and an admittance 332. A differential voltage amplifier may be a circuit that can use a power supply to increase the magnitude of a voltage difference at inputs to supply a voltage output. A differential voltage amplifier can be a five-terminal device comprising an inverting input terminal, a non-inverting input terminal, an output terminal, a positive supply terminal, and a negative supply terminal. For differential voltage amplifier 32: the inverting input terminal (designated with a "-") can be coupled to node 60; the non-inverting input terminal (designated with a "+") can be coupled to node 64; the output terminal can be coupled to node 62; the positive supply terminal can be coupled to a supply voltage (V_{CC}); and the negative supply terminal can be coupled to electrical ground. The supply voltage (V_{CC}) can be supplied by a voltage source (not shown).

Admittance 332 can be coupled between nodes 60 and 62. Admittance 332 can provide negative feedback for differential voltage amplifier 32. Feedback in a circuit may be when output is routed back as input. Negative feedback may be feedback that tends to stabilize the output. Absent feedback, the behavior of differential voltage amplifier 32 can described as: V_{O} = A_{OL} * (V_{IN+} - V_{IN-}), where Vo is the amplifier output voltage, A_{OL} is the open-loop gain of the amplifier, V_{IN+} is the voltage at the non-inverting input, and V_{IN-} is the voltage at the inverting input. Gain may be the ratio of the magnitude of the output voltage to the input voltage of an amplifier. Open-loop gain may be gain of an amplifier without feedback. Differential voltage amplifier 32 can include a large open-loop gain, a large input impedance, and a small output impedance. For example, differential voltage amplifier 32 can be an operational amplifier or the like. Together with the negative feedback provided by admittance 332, differential voltage amplifier 32 can function as a transimpedance amplifier. That is, differential voltage amplifier 32 and admittance 332 can together function to supply the voltage (V_{OUT}) that is proportional to the integrated value of a current through the feedback (I_{FB}).

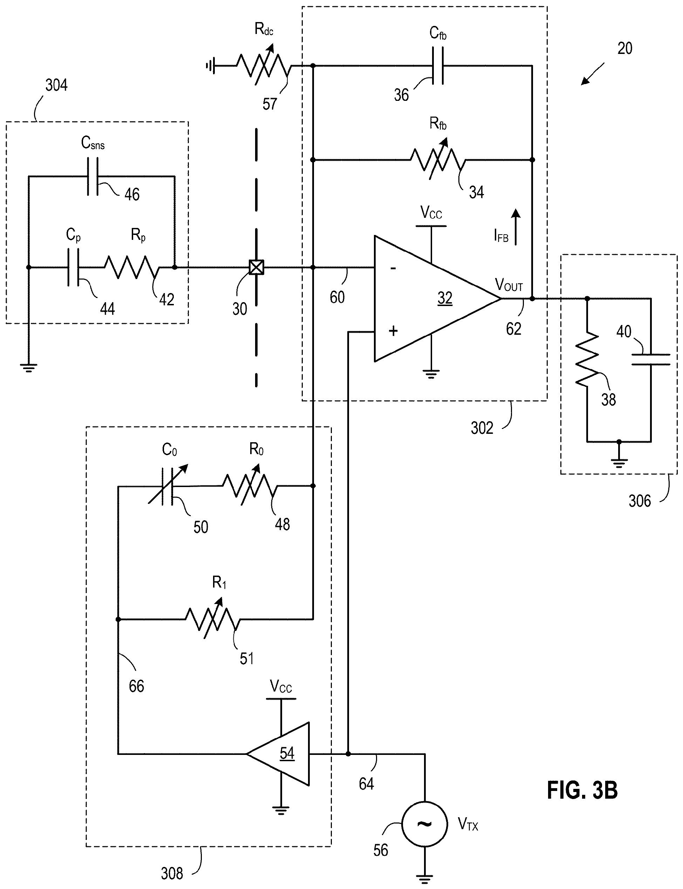

Fig. 3B is a schematic diagram depicting an AFE 20 of a touch controller coupled between an electrode and a load circuit according to some embodiments. Fig. 3B shows an example implementation of the AFE in Fig. 3A. In the example of Fig. 3B, network 304 can include a capacitor 46 in parallel with a series combination of a capacitor 44 and a resistor 42. Capacitor 46 can implement admittance 334. Capacitor 46 can model the touch capacitance between electrode 14 and electrical ground. Capacitor 46 can also be designated as Cₛₙₛ. Capacitor 44 and resistor 42 can implement admittance 336. Capacitor 44 and resistor 42 can model the parasitic current path that interferes with the AFE's measurement of the touch capacitance. Capacitor 44 can also be designated as Cₚ and resistor 42 can also be designated as Rₚ. In the example of Fig. 3B, admittance 332 can include a resistor 34 and a capacitor 36. Capacitor 36 can be coupled between nodes 60 and 62. Resistor 34 can be coupled between nodes 60 and 62 (e.g., in parallel with capacitor 36). In the example of Fig. 3B, network 306 that models the load can include a resistor 38 in parallel with a capacitor 40.

Consider operation of amplifier 302 without cancellation for the current through resistor 42 and capacitor 44. The output voltage (V_{OUT}) can be expressed as: ${V}_{OUT} = \frac{{V}_{TX}}{1 + {sC}_{fb} {R}_{fb}} \left[{sC}_{sns}{R}_{fb}+1+{sC}_{fb}{R}_{fb}+\frac{{sR}_{fb} {C}_{p}}{1 + {sC}_{p} {R}_{p}}\right]$ Eq .1, where s is an independent variable denoting a complex frequency (e.g., generated by a Laplace transform of V_{OUT} as a function of time). It is desirable for the output voltage (V_{OUT}) to be approximately: ${V}_{OUT} \approx \frac{{V}_{TX}}{1 + {sC}_{fb} {R}_{fb}} ⋅ {sC}_{sns} {R}_{fb}$ Eq. 2, which indicates that the output voltage (V_{OUT}) to be proportional to the current through capacitor 46 (e.g., the capacitance (Cₛₙₛ) between the electrode and ground). The term: $\frac{{V}_{TX}}{1 + {sC}_{fb} {R}_{fb}} ⋅ \left[1+{sC}_{fb}{R}_{fb}+\frac{{sR}_{fb} {C}_{p}}{1 + {sC}_{p} {R}_{p}}\right]$ added in Equation (1) is present due to the current through the series combination of resistor 42 and capacitor 44 (e.g., an undesired current through parasitic impedance associated with the electrode).

One technique for cancelling of the undesired current can be to inject current into node 60 using a programmable current source, such as a current-steering digital-to-analog converter (IDAC). The IDAC can inject a current that attempts to mitigate the effect of the undesired current on the output voltage (V_{OUT}). In this scenario, the output voltage (V_{OUT}) can be expressed as: ${V}_{OUT} = \frac{{V}_{TX}}{1 + {sC}_{fb} {R}_{fb}} \left[{sC}_{sns}{R}_{fb}+1+{sC}_{fb}{R}_{fb}+\frac{{sR}_{fb} {C}_{p}}{1 + {sC}_{p} {R}_{p}}\right] - \frac{{I}_{DAC} {R}_{fb}}{1 + {sC}_{fb} {R}_{fb}}$ Eq. 3, where I_{DAC} is the current injected into node 60. For ideal cancellation, the injected current (I_{DAC}) can be: ${I}_{DAC} = \frac{{V}_{TX}}{{R}_{fb}} ⋅ \frac{1 + s \left({R}_{fb}{C}_{p}+{R}_{p}{C}_{p}+{R}_{fb}{C}_{fb}\right) + {s}^{2} {C}_{fb} {R}_{fb} {C}_{p} {R}_{p}}{1 + {sC}_{p} {R}_{p}}$ Eq. 4, However, the programmable current source (e.g., IDAC) needs a wide range to account for variations in capacitor 44 and excitation signal frequency (frequency of V_{TX}). Further, the programmable current source's noise and dynamic range dominates the total system budget, which sets a bound on the minimum system noise floor and maximum SNR.

Returning to Fig. 3A, in some embodiments, AFE 20 can include cancellation circuit 308, which can substantially cancel the undesired current and exhibits advantage over injecting current into node 60 by a programmable current source. Cancellation circuit 308 can include an admittance 330 (also designated as Y_{C}) and a voltage amplifier 54. Admittance 330 can be coupled between node 60 and a node 66. The output of voltage amplifier 54 can be coupled to node 66. The input of voltage amplifier 54 can be coupled to node 64. The supply terminals of voltage amplifier 54 are omitted from Fig. 3A for clarity. In some embodiments, voltage amplifier 54 may have a gain larger than one. A voltage amplifier may be a circuit that can use a power supply to increase the magnitude of a voltage input to supply a voltage output. The behavior of voltage amplifier 54 can described as: V_{O} = β * V_{IN}, where V_{O} is the amplifier output voltage, β is the gain of the amplifier, V_{IN} is the voltage at the input of the amplifier. In embodiments, the gain (β) is greater than one. Admittance 330 and voltage amplifier 54 can operate to substantially cancel the undesired current component in the output voltage (V_{OUT}).

Referring to the example of Fig. 3B, in some embodiments, admittance 330 in can include a resistor 48, a capacitor 50, and a resistor 51. A series combination of resistor 48 and capacitor 50 can be coupled between node 60 and node 66. Resistor 51 can be coupled between node 60 and node 66 (e.g., in parallel with the series combination of resistor 48 and capacitor 50). The positive supply terminal of voltage amplifier 54 can be coupled to a supply voltage (V_{CC}). The negative supply terminal of voltage amplifier 54 can be coupled to electrical ground. A resistor 57 can be coupled between node 60 and electrical ground (also designated R_{dc}. Resistor 57 can be used to set a desired common-mode voltage at the output of amplifier 302.

Assume R_{dc} to be a large resistance (e.g., modeled as infinity), and R₁ be approximately equal to R_{fb}*(β-1). The gain (β) of voltage amplifier 54 can be set to reduce the size of the capacitor C₀ by β-1. With cancellation circuit 308, the output voltage (V_{OUT}) can be expressed as: ${V}_{OUT} \approx \frac{{V}_{TX}}{1 + {sC}_{fb} {R}_{fb}} \left[{sC}_{sns}{R}_{fb}+Comp_Term\right]$ Eq. 5, where "Comp_Term" is the term resulting from cancellation circuit 308 and can be expressed by the expression: $Comp _ Term = \frac{{sR}_{fb} \left[{C}_{p}+{C}_{fb}-{C}_{0}\left(β-1\right)\right] + {s}^{2} {C}_{0} {R}_{fb} \left[{R}_{0}\left({C}_{p}+2{C}_{fb}\right)-{C}_{p}{R}_{p}\left(β-1\right)\right]}{\left(1+{sC}_{p}{R}_{p}\right) \left(1+{sC}_{0}{R}_{0}\right)}$ Eq. 6, Based on the above, for maximum cancellation: ${C}_{0} \approx \frac{{C}_{p} + {C}_{fb}}{β - 1}$ Eq. 7, and ${R}_{0} \approx {R}_{p} \left(β-1\right) ⋅ \frac{{C}_{p}}{{C}_{p} + 2 {C}_{fb}}$ Eq. 8. That is, capacitance of capacitor 50 can be approximately equal to a value of the sum of Cₚ (parasitic capacitance) and C_{fb} (feedback capacitance) divided by the quantity β (gain of voltage amplifier 54) minus one. Resistance of resistor 48 can be approximately equal to a value of the product of Rₚ (parasitic resistance), (β - 1), and Cₚ (parasitic capacitance) divided by the sum of Cₚ and two times C_{fb} (feedback capacitance). With C₀ and R₀ set accordingly, the output voltage (V_{OUT}) can be expressed as in Equation 2 above.

In some embodiments, resistor 34, resistor 48, resistor 51, and capacitor 50 can be programmable across a range of resistance and capacitance, respectively. The values of those components can be set, for example, during manufacture, during operation, or both based on values of Cₚ and Rₚ (predicted, measured, etc.). Resistor 57 can also be programmable to adjust the common-mode voltage at node 62. In some embodiments, voltage amplifier 54 and voltage source 56 can be shared among multiple channels 28. Cancellation circuit 308 can consume less implementation area on an IC than use of a programmable current source (e.g., IDAC) for each channel. The RC-based tuning of cancellation circuit 308 can be less complex than vector-based tuning of an IDAC. As noted above, voltage amplifier 54 can be shared among channels, which can save area and power.

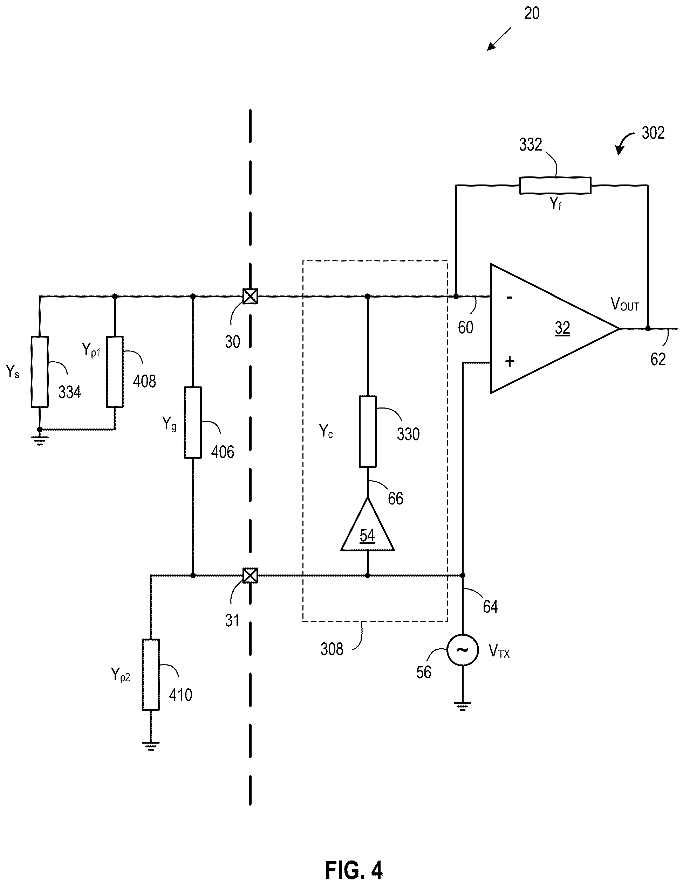

Fig. 4 is a schematic diagram depicting an AFE 20 of a touch controller coupled to an electrode according to other embodiments. Elements of Fig. 4 that are the same or similar to those of Fig. 3A are designated with identical reference numerals and described in detail above. Further, in the example of Fig. 4, impedances in the networks of AFE 20 are modeled by admittances.

In the example of Fig. 4, device 10 can include additional admittances associated with the capacitive sensor (e.g., associated with guarding using external shields). An admittance 408 (also designated Yₚ₁) can be coupled between node 60 and electrical ground. An admittance 410 (also designated Yₚ₂) can be coupled between node 64 and electrical ground. An admittance 406 (also designated Y_{g}) can be coupled between nodes 60 and 64. In the example shown, the admittance Y_{c} of cancellation circuit 308 can be set to maximize cancellation as: ${Y}_{c} \approx \frac{{Y}_{p 1} + {Y}_{s} + {Y}_{f}}{β - 1}$ Eq. 9. That is, the admittance of the network in cancellation circuit 308 coupled between the output of voltage amplifier 54 and node 60 (the inverting input of amplifier 302) can be approximately equal to the sum of a first admittance between node 60 ground, a second admittance between node 60 and ground, and the admittance of the electrode to ground divided by the quantity β (the gain of voltage amplifier 54) minus one.

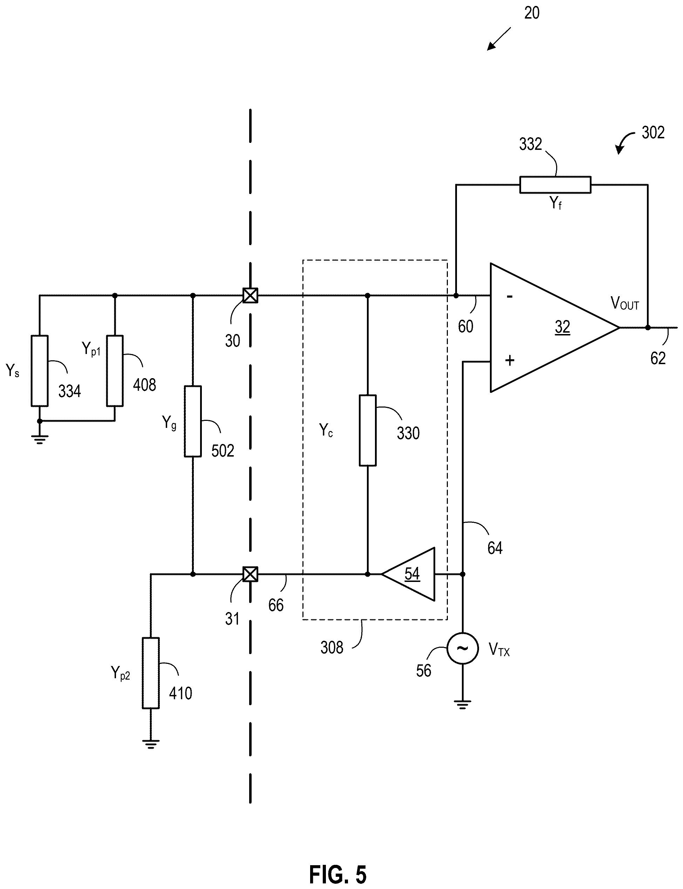

Fig. 5 is a schematic diagram depicting an AFE 20 of a touch controller coupled to an electrode according to other embodiments. Elements of Fig. 5 that are the same or similar to those of Figs. 3A-4 are designated with identical reference numerals and described in detail above.

In the example shown, the admittance Y_{c} of cancellation circuit 308 can be set to maximize cancellation as: ${Y}_{c} \approx \frac{{Y}_{p 1} + {Y}_{s} + {Y}_{f}}{β - 1} - {Y}_{g}$ Eq. 10.

That is, the admittance of the network in cancellation circuit 308 coupled between the output of voltage amplifier 54 and node 60 (the inverting input of amplifier 302) can be: a fraction minus a third admittance between nodes 60 and 66, where the numerator of the fraction is the sum of a first admittance between node 60 ground, a second admittance between node 60 and ground, and the admittance of the electrode to ground and the denominator of the fraction is the quantity β (the gain of voltage amplifier 54) minus one.

While some processes and methods having various operations have been described, one or more embodiments also relate to a device or an apparatus for performing these operations. The apparatus may be specially constructed for required purposes, or the apparatus may be a general-purpose computer selectively activated or configured by a computer program stored in the computer. Various general-purpose machines may be used with computer programs written in accordance with the teachings herein, or it may be more convenient to construct a more specialized apparatus to perform the required operations.

As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items. By way of example, the phrases "at least one of A, B, and C" or "at least one of A, B, or C" each refer to only A, only B, or only C; and/or any combination of A, B, and C. In instances where it is intended that a selection be of "at least one of each of A, B, and C ," or alternatively, "at least one of A, at least one of B, and at least one of C," it is expressly described as such.

It will be understood that, although the terms "first," "second," etc. may be used herein to describe various elements, these elements should not be limited by these terms. These terms are only used to distinguish one element from another. For example, a first element could be termed a second element, and, similarly, a second element could be termed a first element, without departing from the scope of the present disclosure.

As used herein, the term "couple" or "connect" and its derivatives include: (a) electrical and communicative coupling or connecting; and (b) do not imply a direct coupling or connection, but rather may include intervening elements, unless described as "directly coupled" or "directly connected."

As used in the specification and the appended claims and in addition to its ordinary meaning, the term 'approximately' means to within an acceptable limit or amount to one having ordinary skill in the art. For example, "approximately the same" means that one of ordinary skill in the art would consider the items being compared to be the same. In another example, "approximately equal to" means that one of ordinary skill in the art would consider the values being compared to be equal. As used in the specification and appended claims, and in addition to their ordinary meanings, the terms 'substantial' or 'substantially' mean to within acceptable limits or degree. For example, 'substantially cancelled' means that one skilled in the art would consider the cancellation to be acceptable.

Although one or more embodiments of the present invention have been described in some detail for clarity of understanding, certain changes may be made within the scope of the claims. Accordingly, the described embodiments are to be considered as illustrative and not restrictive, and the scope of the claims is not to be limited to details given herein but may be modified within the scope and equivalents of the claims. In the claims, elements and/or steps do not imply any particular order of operation unless explicitly stated in the claims.

Boundaries between components, operations, and data stores are somewhat arbitrary, and particular operations are illustrated in the context of specific illustrative configurations. Other allocations of functionality are envisioned and may fall within the scope of the invention. In general, structures and functionalities presented as separate components in exemplary configurations may be implemented as a combined structure or component. Similarly, structures and functionalities presented as a single component may be implemented as separate components. These and other variations, additions, and improvements may fall within the scope of the appended claims.
The following are further embodiments of the present invention:
1. An apparatus, comprising:
   an electrode including a first admittance to an electrical ground and a second admittance to the electrical ground, the electrode coupled to a first node;
   a first amplifier including a first input terminal coupled to the first node, a second input terminal coupled to a voltage source, and an output terminal configured to supply a first voltage;
   a second amplifier including an input terminal, coupled to the voltage source, and an output terminal, the second amplifier having a gain larger than one; and
   a first network coupled between the output terminal of the second amplifier and the first node, the first network having a third admittance.
2. The apparatus of embodiment 1, wherein the first network comprises:
   a first resistor coupled in series with a first capacitor, the series combination of the first resistor and the first capacitor coupled between the first node and a second node; and
   a second resistor coupled between the first node and the second node
   wherein the output of the second amplifier is coupled to the second node.
3. The apparatus of embodiment 2, wherein the first amplifier comprises:
   a second capacitor in parallel with a third resistor, the parallel combination of the second capacitor and the third resistor being coupled between the output terminal of the first amplifier and the inverting terminal of the first amplifier.
4. The apparatus of embodiment 3, wherein the second resistor has a resistance approximately equal to a product of a resistance of the third resistor and a quantity of the gain minus one.
5. The apparatus of embodiment 4, wherein the first capacitor has a capacitance approximately equal to a sum of a capacitance of the second admittance and a capacitance of the second capacitor divided by the quantity of the gain minus one.
6. The apparatus of embodiment 4, wherein the first resistor has a resistance approximately equal to a fraction, a numerator of the fraction being the product of a resistance of the second admittance, a capacitance of the second admittance, and the quantity of the gain minus one, a denominator of the fraction being a sum of the capacitance of the second admittance and two times a capacitance of the second capacitor.
7. The apparatus of embodiment 1, wherein the input terminal of the second amplifier and the voltage source are coupled at a second node, the apparatus further comprising a fourth admittance coupled between the first node and the second node and a fifth admittance coupled between the second node and the electrical ground.
8. The apparatus of embodiment 1, wherein the output terminal of the second amplifier and the first network are coupled to a second node, the apparatus further comprising a fourth admittance coupled between the first node and the second node and a fifth admittance coupled between the second node and the electrical ground.
9. A touch controller for a capacitive sensor, comprising:
   a plurality of channels coupled to a digital signal processor (DSP); and
   a first channel of the plurality of channels including a first analog front-end (AFE) coupled to a first electrode of the capacitive sensor, the first electrode including a first admittance to an electrical ground and a second admittance to the electrical ground, the first electrode coupled to a first node, the first AFE comprising:
      a first amplifier including a first input terminal coupled to the first node, a second input terminal coupled to a voltage source, and an output terminal configured to supply a first voltage;
      a second amplifier including an input terminal coupled to the voltage source and an output terminal, the second amplifier having a gain larger than one; and
      a first network coupled between the output terminal of the second amplifier and the first node, the first network having a third admittance.
10. The touch controller of embodiment 9, wherein the first network comprises:
   a first resistor coupled in series with a first capacitor, the series combination of the first resistor and the first capacitor coupled between the first node and a second node; and
   a second resistor coupled between the first node and the second node
   wherein the output of the second amplifier is coupled to the second node.
11. The touch controller of embodiment 10, wherein the first amplifier comprises:
   a second capacitor in parallel with a third resistor, the parallel combination of the second capacitor and the third resistor being coupled between the output terminal of the first amplifier and the inverting terminal of the first amplifier.
12. The touch controller of embodiment 11, wherein the second resistor has a resistance approximately equal to a product of a resistance of the third resistor and a quantity of the gain minus one.
13. The touch controller of embodiment 12, wherein the first capacitor has a capacitance approximately equal to a sum of a capacitance of the second admittance and a capacitance of the second capacitor divided by the quantity of the gain minus one.
14. The touch controller of embodiment 12, wherein the first resistor has a resistance approximately equal to a fraction, a numerator of the fraction being the product of a resistance of the second admittance, a capacitance of the second admittance, and the quantity of the gain minus one, a denominator of the fraction being a sum of the capacitance of the second admittance and two times a value of a capacitance of the second capacitor.
15. A device, comprising:
   at least one conductor coupled to an electrical ground;
   an electrode of a capacitive sensor including a first admittance to at least one conductor and a second admittance to the electrical ground, the electrode coupled to a first node; and
   a touch controller of the capacitive sensor including:
      a first amplifier, the first amplifier including a first input terminal coupled to the first node, a second input terminal coupled to a voltage source, and an output terminal configured to supply a first voltage;
      a second amplifier including an input terminal coupled to the voltage source and an output terminal, the second amplifier having a gain larger than one; and
      a first network coupled between the output terminal of the second amplifier and the first node, the first network having a third admittance.
16. The device of embodiment 15, wherein the first network comprises:
   a first resistor coupled in series with a first capacitor, the series combination of the first resistor and the first capacitor coupled between the first node and a second node; and
   a second resistor coupled between the first node and the second node
   wherein the output of the second amplifier is coupled to the second node.
17. The device of embodiment 16, wherein the first amplifier comprises:
   a second capacitor in parallel with a third resistor, the parallel combination of the second capacitor and the third resistor being coupled between the output terminal of the first amplifier and the inverting terminal of the first amplifier.
18. The device of embodiment 17, wherein the second resistor has a resistance approximately equal to a product of a resistance of the third resistor and a quantity of the gain minus one.
19. The device of embodiment 18, wherein the first capacitor has a capacitance approximately equal to a sum of a capacitance of the second admittance and a capacitance of the second capacitor divided by the quantity of the gain minus one.
20. The device of embodiment 18, wherein the first resistor has a resistance approximately equal to a fraction, a numerator of the fraction being the product of a resistance of the second admittance, a capacitance of the second admittance, and the quantity of the gain minus one, a denominator of the fraction being a sum of the capacitance of the second admittance and two times a capacitance of the second capacitor.

## Claims

1. An apparatus, comprising:
an electrode including a first admittance to an electrical ground and a second admittance to the electrical ground, the electrode coupled to a first node;
a first amplifier including a first input terminal coupled to the first node, a second input terminal coupled to a voltage source, and an output terminal configured to supply a first voltage;
a second amplifier including an input terminal, coupled to the voltage source, and an output terminal, the second amplifier having a gain larger than one; and
a first network coupled between the output terminal of the second amplifier and the first node, the first network having a third admittance.

2. A touch controller for a capacitive sensor, comprising:
a plurality of channels coupled to a digital signal processor (DSP); and
a first channel of the plurality of channels including a first analog front-end (AFE) coupled to a first electrode of the capacitive sensor, the first electrode including a first admittance to an electrical ground and a second admittance to the electrical ground, the first electrode coupled to a first node, the first AFE comprising:
a first amplifier including a first input terminal coupled to the first node, a second input terminal coupled to a voltage source, and an output terminal configured to supply a first voltage;
a second amplifier including an input terminal coupled to the voltage source and an output terminal, the second amplifier having a gain larger than one; and
a first network coupled between the output terminal of the second amplifier and the first node, the first network having a third admittance.

3. A device, comprising:
at least one conductor coupled to an electrical ground;
an electrode of a capacitive sensor including a first admittance to at least one conductor and a second admittance to the electrical ground, the electrode coupled to a first node; and
a touch controller of the capacitive sensor including:
a first amplifier, the first amplifier including a first input terminal coupled to the first node, a second input terminal coupled to a voltage source, and an output terminal configured to supply a first voltage;
a second amplifier including an input terminal coupled to the voltage source and an output terminal, the second amplifier having a gain larger than one; and
a first network coupled between the output terminal of the second amplifier and the first node, the first network having a third admittance.

4. The apparatus of claim 1, the touch controller of claim 2, or the device of claim 3, wherein the first network comprises:
a first resistor coupled in series with a first capacitor, the series combination of the first resistor and the first capacitor coupled between the first node and a second node; and
a second resistor coupled between the first node and the second node
wherein the output of the second amplifier is coupled to the second node.

5. The apparatus of claims 1 or 4, the touch controller of claims 2 or 4, or the device of claims 3 or 4, wherein the first amplifier comprises:
a second capacitor in parallel with a third resistor, the parallel combination of the second capacitor and the third resistor being coupled between the output terminal of the first amplifier and the inverting terminal of the first amplifier.

6. The apparatus, the touch controller or the device of claims 4 or 5, wherein the second resistor has a resistance approximately equal to a product of a resistance of the third resistor and a quantity of the gain minus one.

7. The apparatus, the touch controller or the device of claims 5 or 6, wherein the first capacitor has a capacitance approximately equal to a sum of a capacitance of the second admittance and a capacitance of the second capacitor divided by the quantity of the gain minus one.

8. The apparatus, the touch controller or the device of claims 5 to 7, wherein the first resistor has a resistance approximately equal to a fraction, a numerator of the fraction being the product of a resistance of the second admittance, a capacitance of the second admittance, and the quantity of the gain minus one, a denominator of the fraction being a sum of the capacitance of the second admittance and two times a capacitance of the second capacitor.

9. The apparatus of claim 1 or claims 4 to 8, the touch controller of claim 2 or claims 4 to 8, or the device of claims 3 to 8, wherein the input terminal of the second amplifier and the voltage source are coupled at a second node, the apparatus further comprising a fourth admittance coupled between the first node and the second node and a fifth admittance coupled between the second node and the electrical ground.

10. The apparatus of claim 1 or claims 4 to 9, the touch controller of claim 2 or claims 4 to 9, or the device of claims 3 to 9, wherein the output terminal of the second amplifier and the first network are coupled to a second node, the apparatus further comprising a fourth admittance coupled between the first node and the second node and a fifth admittance coupled between the second node and the electrical ground.
